Europäisches Patentamt

European Patent Office

Office européen des brevets

(19)

(11) Numéro de publication : **0 380 399 B1**

## (12) FASCICULE DE BREVET EUROPEEN

(45) Date de publication du fascicule du brevet :
**15.04.92 Bulletin 92/16**

(51) Int. Cl.$^5$ : **B60J 10/06**

(21) Numéro de dépôt : **90400173.2**

(22) Date de dépôt : **22.01.90**

(54) **Profilé en élastomère extrudé équipé d'un enjoliveur pour encadrement de glace d'une porte d'automobile et son procédé de fabrication.**

(30) Priorité : **27.01.89 FR 8901052**

(43) Date de publication de la demande :
**01.08.90 Bulletin 90/31**

(45) Mention de la délivrance du brevet :
**15.04.92 Bulletin 92/16**

(84) Etats contractants désignés :
**AT BE CH DE ES GB IT LI LU NL SE**

(56) Documents cités :
**EP-A- 0 241 264**
**FR-A- 2 257 008**
**GB-A- 2 103 268**
**GB-A- 2 181 698**

(73) Titulaire : **ETABLISSEMENTS MESNEL SOCIETE ANONYME DITE :**
**9 et 11, Rue de la Rivière**
**F-78420 Carrières-Sur-Seine (FR)**

(72) Inventeur : **Mesnel, François**
**6 bis, rue Salignac Fénelon**
**F-92200 Neuilly-Sur-Seine (FR)**
Inventeur : **Mesnel, Gérard**
**16, rue Victor Hugo**
**F-78420 Carrières-Sur-Seine (FR)**

(74) Mandataire : **Jolly, Jean-Pierre et al**
**Cabinet Jolly 54, rue de Clichy**
**F-75009 Paris (FR)**

EP 0 380 399 B1

Jouve, 18, rue Saint-Denis, 75001 PARIS

## Description

La présente invention concerne un profilé en élastomère extrudé équipé d'une lèvre formant enjoliveur pour encadrement de glace de porte d'automobile. L'invention concerne également un procédé de fabrication d'un tel profilé.

On sait que, dans les voitures modernes de catégorie supérieure, un profilé en une matière plastique telle que le polychlorure de vinyle est prévu sur la face interne des portes du véhicule, aussi bien à l'avant qu'à l'arrière, où il fait office d'enjoliveur des montants de porte. Pour des raisons techniques, cet enjoliveur est réalisé par moulage et non par des procédés plus faciles à mettre en oeuvre en série tels que l'extrusion. Cet enjoliveur est habituellement fixé sur l'encadrement de vitre d'une porte à l'aide de clips ou d'agrafes et il est indépendant des profilés d'étanchéité en élastomère à armature métallique dont sont habituellement équipés ces encadrements. Ces profilés sont généralement eux-mêmes rendus solidaires des encadrements de vitre en coiffant une bride de l'encadrement à l'aide d'une première partie à section transversale en U de ces profilés, qui forme pince, tandis qu'une seconde partie, également à section transversale en U, dirigée en sens inverse de la précédente et dite "coulisse", reçoit la glace mobile et assure son guidage pendant ses mouvements, ainsi que l'étanchéité à sa périphérie

La présente invention vise à simplifier les opérations de mise en place sur les encadrements de vitre des enjoliveurs et des profilés d'étanchéité qui viennent d'être mentionnés en limitant ces opérations à la seule pose, de façon usuelle, des profilés d'étanchéité sur les brides des encadrements.

A cet effet, l'invention a pour objet un profilé d'étanchéité en un élastomère extrudé à armature métallique pour encadrement de vitre d'une porte d'automobile, ce profilé étant du type comprenant une première partie à section en U apte à coiffer une bride de cet encadrement et une seconde partie à section en U, dirigée en sens inverse de la première partie et attenante à la branche du U de celle-ci destinée à être tournée vers l'extérieur de l'automobile, pour recevoir la vitre de cette porte et en assurer l'étanchéité ce profilé étant du type divulgué, par exemple, EP-A-0241264, ce profilé étant caractérisé en ce qu'il comporte, sur une partie au moins de sa longueur, au moins une lèvre moulée formant enjoliveur, rapportée sur le profilé et attenante à la branche du U de la première partie destinée à être tournée vers l'intérieur du véhicule.

Dans les parties d'angle, le profilé pourra comporter des parties dont l'armature métallique et l'élastomère attenant auront été partiellement éliminés, de façon connue en soi, pour permettre le cintrage du profilé, et auront été remplacés par une matière plastique moulée assurant la continuité du profilé et l'étanchéité dans les angles.

L'invention a également pour objet un procédé de fabrication d'un tel profilé, caractérisé en ce que, à partir d'un profilé d'étanchéité en un élastomère extrudé à armature métallique pour encadrement de vitre d'automobile, du type comprenant une première partie à section en U apte à coiffer une bride de cet encadrement et une seconde partie à section en U, dirigée en sens inverse de la première partie et attenante à la branche du U de celle-ci destinée à être tournée vers l'extérieur de l'automobile, pour recevoir la vitre de cette porte et en assurer l'étanchéité, on surmoule sur une partie au moins de la longueur de la branche du U de la première partie destinée à être tournée vers l'intérieur de la porte d'automobile, de manière à l'en rendre attenante, au moins une lèvre, qui forme enjoliveur.

La lèvre formant enjoliveur peut être en toute matière moulable, notamment en une matière thermoplastique.

Dans le cas où le profilé comporte des parties d'angle dans lesquelles une partie de l'armature et de l'élastomère a été éliminée et remplacée par moulage d'une matière plastique, le moulage de ces parties et du ou des enjoliveurs pourra avantageusement être réalisé en une unique opération.

On conçoit qu'avec un tel profilé les opérations de montage de l'enjoliveur sur l'encadrement de vitre sont considérablement simplifiées, puisque c'est le profilé d'étanchéité qui sert de support à l'enjoliveur et que ce profilé est mis en place de façon usuelle sur une bride de cet encadrement.

On peut donner à l'enjoliveur tout profil désiré réalisable par moulage, en particulier un profil à section transversale diminuant d'une extrémité à l'autre de l'enjoliveur.

En combinant en une seule opération, facile à mettre en oeuvre, les deux opérations de la technique antérieure, on réduit en outre de façon appréciable les frais de mise en place de ces organes.

Enfin, le stockage de ces éléments pour les fabricants d'automobiles sera également facilité, puisqu'ils constituent un organe monobloc.

Les dessins annexés illustrent une forme de mise en oeuvre de l'invention qui sera décrite ci-après, à titre d'exemple non limitatif. Sur ces dessins:

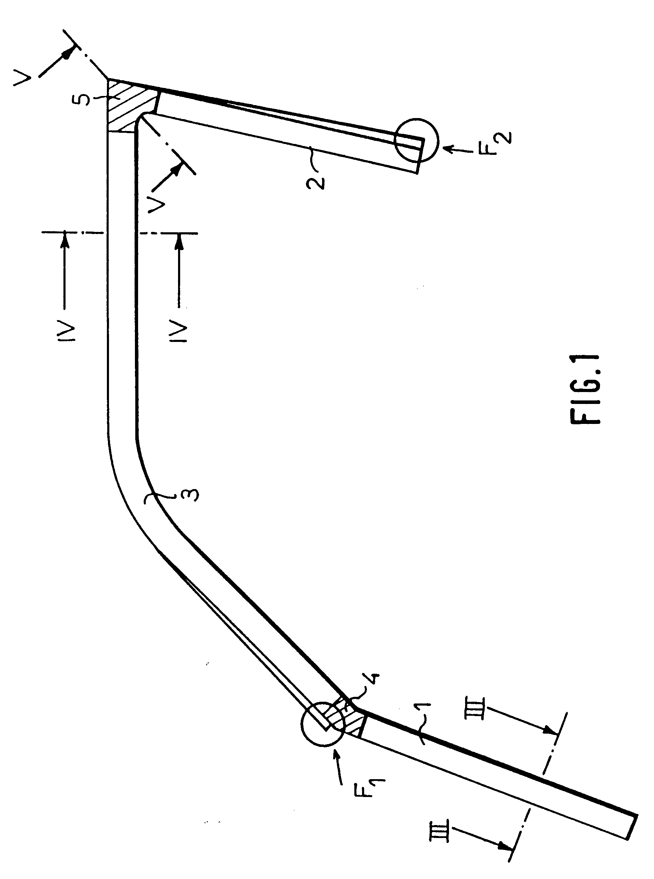

La figure 1 est une vue en élévation latérale du profilé;

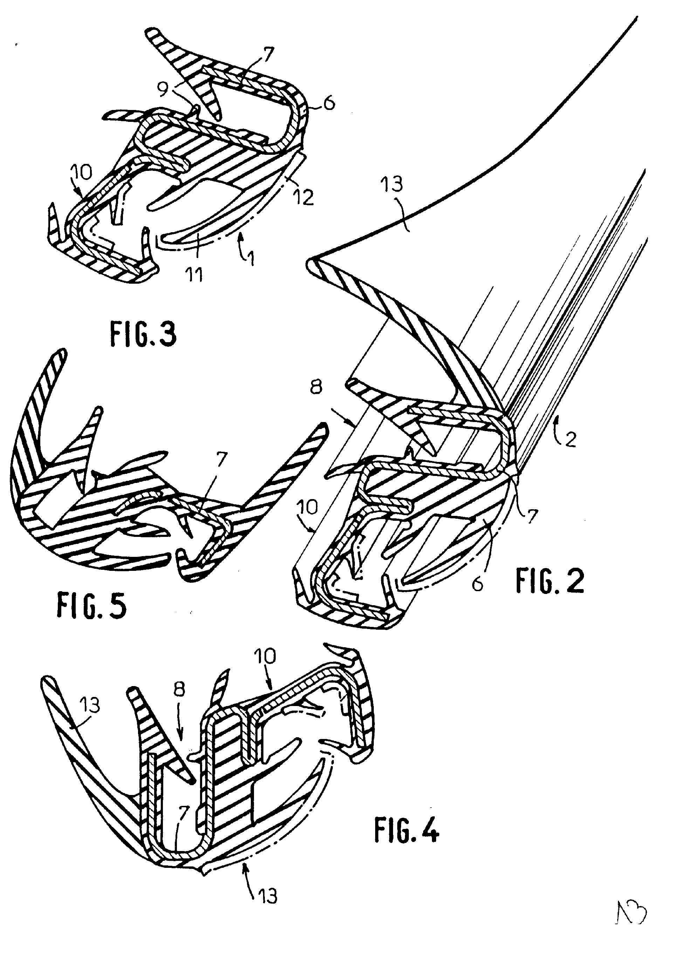

La figure 2 est une vue en perspective à plus grande échelle, partiellement en coupe, suivant les flèches $F_1$ ou $F_2$ de la figure 1;

Les figures 3, 4 et 5, sont des coupes à plus grande échelle, respectivement suivant les lignes III-III, IV-IV, et V-V de la figure 1.

Le profilé pour encadrement de vitre conforme à l'invention représenté sur ces dessins comprend deux parties 1 et 2, destinées à équiper les montants verticaux de l'encadrement, et une partie supérieure incurvée 3, réunissant les parties 1 et 2.

Les parties 1, 2 et 3, sont constituées par un profilé continu en élastomère extrudé à armature métallique, dont, dans les parties d'angle 4 et 5, des parties de l'armature métallique et du matériau extrudé attenant ont été éliminées (voir figure 5) pour permettre le cintrage du profilé. A la place des parties éliminées du profilé en 4 et 5, un matériau moulable est en général surmoulé pour assurer la continuité de surface du profilé et l'étanchéité dans les angles.

La partie 1 comprend uniquement un profilé de la technique antérieure, en élastomère 6 extrudé sur une armature 7. Une première portion 8 de ce profilé a une section transversale en U et est destinée à coiffer et à pincer une bride d'un encadrement de porte pour en solidariser le profilé. Des lèvres telles que 9, faisant saillie vers l'intérieur du U, maintiennent la partie 1 en position fixe sur la bride. Une seconde portion 10 du profilé, également à section en U, mais inversée par rapport à la partie 8, à laquelle elle est attenante du côté extérieur du véhicule, est destinée à recevoir la vitre mobile de la porte pour la guider au cours de ses déplacements et pour assurer son étanchéité. Dans ce but, les branches du U comportent, sur leur face externe, des lèvres telles que 11, qui lèchent la vitre, tant à l'extérieur qu'à l'intérieur du véhicule. Certaines de ces lèvres peuvent être revêtues de fibres floquées, schématisées en 12. Avantageusement, la base de l'armature en U de la partie 10 peut être sectionnée, de manière à conférer une souplesse de mouvement à la partie externe, qui n'est ainsi reliée au reste du profilé que par une charnière en élastomère.

Le profilé de la partie 1 est réalisé de façon connue en soi par extrusion de l'élastomère sur l'armature.

Les parties 2 et 3 comprennent de façon analogue un profilé d'étanchéité en tout point similaire à celui de la partie 1 et réalisé comme celui-ci par extrusion de l'élastomère sur une armature métallique appropriée, mais, conformément à l'invention, elles comprennent aussi, rapportée par moulage sur la branche du U de la portion 8 formant pince du profilé et tournée vers l'intérieur du véhicule, une lèvre 13 formant enjoliveur. Cette lèvre peut par exemple être en une matière thermoplastique. Après réalisation du profilé par extrusion, et élimination par grugeage, dans les parties d'angle 4 et 5 d'une partie de l'armature et de l'élastomère attenant, pour permettre le cintrage du profilé, celui-ci est cintré à la forme désirée et simplement placé dans un moule où la lèvre 13 est moulée par injection, en même temps que les pièces de liaison 4 et 5.

Dans les parties d'angle 4 et 5, la lèvre 13 peut, de façon connue en soi et comme représenté sur les dessins, avoir une dimension variable d'une extrémité à l'autre des parties 2 et 3.

Il est ainsi possible de monter en une seule opération le profilé d'étanchéité et les enjoliveurs attenants en fixant de façon usuelle la partie 8 sur la bride de l'encadrement de vitre d'une porte d'automobile, sans avoir à mettre en place séparément les enjoliveurs, par une opération fastidieuse et à l'aide d'éléments auxiliaires de fixation.

**Revendications**

1. Profilé d'étanchéité en un élastomère extrudé (6) à armature métallique (7) pour encadrement de vitre d'une porte d'automobile, ce profilé étant du type comprenant une première partie (8) à section en U apte à coiffer une bride de cet encadrement et une seconde partie (10) à section en U, dirigée en sens inverse de la première partie et attenante à la branche du U de celle-ci destinée à être tournée vers l'extérieur de l'automobile, pour recevoir la vitre de cette porte et en assurer l'étanchéité, ce profilé étant caractérisé en ce qu'il comporte, sur une partie au moins de sa longueur, au moins une lèvre moulée (13) formant enjoliveur, rapportée sur le profilé et attenante à la branche du U de la première partie (8) destinée à être tournée vers l'intérieur du véhicule.

2. Profilé selon la revendication 1, caractérisé en ce qu'il est cintré à la forme de l'encadrement de vitre et comporte des parties d'angle (4 et 5) dans lesquelles une partie de l'armature et de l'élastomère attenant a été éliminée par grugeage et a été remplacée par une matière plastique moulée.

3. Profilé selon l'une des revendications 1 et 2, caractérisé en ce que la ou les lèvres (13) formant enjoliveur ont des dimensions variables en différents emplacements de sa longueur.

4. Procédé de fabrication d'un profilé selon l'une des revendications 1 et 3, caractérisé en ce que, à partir d'un profilé d'étanchéité en un élastomère extrudé à armature métallique pour encadrement de vitre d'automobile, du type comprenant une première partie (8) à section en U apte à coiffer une bride de cet encadrement et une seconde partie (10) à section en U, dirigée en sens inverse de la première partie et attenante à la branche du U de celle-ci destinée à être tournée vers l'extérieur de l'automobile, pour recevoir la vitre de cette porte et en assurer l'étanchéité, on surmoule sur une partie au moins de la longueur de la branche du U de la première partie (8) destinée à être tournée vers l'intérieur de la porte d'automobile, de manière à l'en rendre attenante, au moins une lèvre (13), qui forme enjoliveur.

5. Procédé selon la revendication 4, caractérisé en ce qu'on élimine dans les parties du profilé correspondant aux parties d'angle de l'encadrement de vitre une partie de l'armature métallique et de l'élastomère attenant, on cintre le profilé à la forme de l'encadrement de vitre, on l'introduit dans cette position dans un moule et l'on moule simultanément le ou les enjoliveurs (13) et la matière plastique destinée à assurer la continuité des parties d'angle.

## Patentansprüche

1. Dichtungsprofil aus einem extrudierten Elastomer (6) mit metällischer Armierung (7) zur Scheibeneinrahmung einer Kraftfahrzeugtür, wobei das Profil einen ersten Bereich (8) mit U-förmigem Querschnitt, welcher zum Umfassen eines Flansches des Rahmens geeignet ist, und einen zweiten Bereich (10) mit U-förmigem Querschnitt aufweist, welcher in zum ersten Bereich umgekehrter Richtung orientiert ist und am Schenket des U desselben anliegt, welcher für ein Drehen zum Äußeren des fahrzeuges bestimmt ist, um die Scheibe der Tür aufzunehmen und die Dichtheit sicherzustellen, dadurch gekennzeichnet, daß das Profit in einem Bereich über wenigstens einen Teil seiner Länge eine eine Zierleiste bildende Lippe (13) aufweist, welche durch Formen an das Profil anschließt und am Schenkel des U des ersten Bereiches (8) anliegt, welcher für ein Drehen ins Innere des Fahrzeuges bestimmt ist.

2. Profil nach Anspruch 1, dadurch gekennzeichnet, daß es entsprechend der Form des Rahmens der Scheibe gekrümmt ist und Eckbereiche (4 und 5) umfaßt, in welchen ein Bereich der Armierung und des anliegenden Elastomers durch ein Ausnehmen entfernt ist und durch einen geformten Kunststoff ersetzt ist.

3. Profil nach einem der Ansprüche 1 oder 2, dadurch gekennzeichnet, daß die die Zierleiste bildende(n) Lippe(n) (13) entsprechend unterschiedlichen Positionierungen über ihre Länge variable Abmessungen aufweist(en).

4. Verfahren zur Herstellung eines Profils nach einem der Ansprüche 1 und 3, dadurch gekennzeichnet, daß ausgehend von einem Dichtungsprofil aus einem extrudierten Elastomer mit metallischer Armierung (7) zur Scheibeneinrahmung einer Kraftfahrzeugtür, wobei das Profil einem ersten Bereich (8) mit U-förmigem Querschnitt, welcher zum Umfassen eines Flansches des Rahmens geeignet ist, und einen zweiten Bereich (10) mit U-förmigem Querschnitt aufweist, welcher in zum ersten Bereich umgekehrter Richtung orientiert ist und am Schenkel des U desselben anliegt, welcher für ein Drehen zum Äußeren des Fahrzeuges bestimmt ißt, um die Scheibe der Tür aufzunehmen und die Dichtheit sicherzustellen, an einem Bereich über wenigstens einen Teil seiner Länge des Schenkels des U des ersten Bereiches (8), welcher für ein Drehen ins Innere der Fahrzeugtür bestimmt ist, wenigstens eine eine Zierleiste bildende Lippe (13) in anliegender Verbindung angeformt wird.

5. Verfahren nach Anspruch 4, dadurch gekennzeichnet, daß in Eckbereichen des Rahmens der Scheibe in entsprechenden Bereichen des Profils ein Teil der metallischen Armierung und des anschließenden Elastomers entfernt wird, daß das Profil entsprechend der Form des Rahmens der Scheibe gekrümmt wird, daß es in dieser Position in eine Form eingebracht wird und daß gleichzeitig die Lippe(n) (13) und der zur Sicherstellung der Kontinuität der abgewinkelten Bereiche bestimmte Kunststoff geformt bzw. gegossen werden.

## Claims

1. A sealing member of an extruded elastomer (6) with a metal reinforcement (7) for the window frame structure of a motor vehicle door, the sealing member being of the type comprising a first portion (8) of U-shaped section for fitting over a flange of the window frame structure and a second portion ( 10 ) of U-shaped section which is directed in the opposite direction to the first portion and adjoins the limb of the U-shape thereof which is intended to be towards the outside of the motor vehicle, to receive the window of said door and to provide a sealing effect in respect thereof, the sealing member being characterised in that over a portion at least of its length it comprises a lip (13) forming an embellishment trim, which is added by moulding to the sealing member and which adjoins the limb of the U-shape of the first portion (8), which is intended to be towards the interior of the vehicle.

2. A sealing member according to claim 1 characterised in that it is curved to the shape of the window frame structure and comprises angle portions (4, 5) in which a portion of the reinforcement and the adjoining elastomer has been removed by notching and replaced by a moulded plastics material.

3. A sealing member according to one of claims 1 and 2 characterised in that the lip or lips (13) forming the embellishment trim are of variable dimensions in different locations along its length.

4. A process for the production of a sealing member according to one of claims 1 and 3 characterised in that, starting from a sealing member of an extruded elastomer with a metal reinforcement for a motor vehicle window frame structure, of the type comprising a first portion (8) of U-shaped section for fitting over a flange of said window frame structure and a second portion (10) of U-shaped section which is directed in the opposite direction to the first portion and which adjoins the limb of the U-shape thereof, which is intended to be towards the exterior of the motor vehicle, for receiving the window of said door and to provide for sealing in respect thereof, moulded on to a portion at least of the length of the limb of the U-shape of the first portion (8) which is intended to be towards the interior of the motor vehicle door, so as to make it adjoining same, is at least one lip (11) which forms an embellishment trim.

5. A process according to claim 4 characterised in that a portion of the metal reinforcement and the adjoining elastomer are removed in the portions of the sealing member corresponding to the angle portions of the window frame structure, the sealing member is bent to the shape of the window frame structure, it is introduced into a mould in that position and the embellishment trim or trims (13) and the plastics material intended to ensure continuity of the angle portions are simultaneously moulded.

FIG.1

EP 0 380 399 B1

FIG.3

FIG.5

FIG.2

FIG.4